# EUROPÄISCHE PATENTANMELDUNG

(11) **EP 4 793 056 A1**
(43) Veröffentlichungstag der Anmeldung: **19.08.2026**
(21) Anmeldenummer: 26157841.3
(22) Anmeldetag: 11.02.2026
(51) Int. Cl.: B42D 25/324, B42D 25/328, B42D 25/36

(54) **SICHERHEITSELEMENT MIT KIPPEFFEKT**

(30) Priorität: 12.02.2025 DE 102025105082
(71) Anmelder: Giesecke+Devrient Currency Technology GmbH, 81677 München (DE)
(72) Erfinder: Fuhse, Christian, 81677 München (DE)
(74) Vertreter: Giesecke+Devrient IP

(57) **Zusammenfassung**

Sicherheitselement, das einem Betrachter ein Wechselbild mit mindestens zwei verschiedenen Ansichten darbietet, wobei die erste Ansicht ein erstes Motiv und die zweite Ansicht ein zweites Motiv zeigt, die im gleichen oder zumindest überlappenden Flächenbereichen erscheinen. Erfindungsgemäß bestehen das erste und zweite Motiv jeweils aus einem hell erscheinenden Vordergrundbereich und einem diesen Vordergrundbereich umgebenden dunkel erscheinenden Hintergrundbereich. Unter gerichteter Beleuchtung erscheint beim Kippen des Sicherheitselements um eine erste Achse das erste Motiv nur in einem ersten Betrachtungswinkelbereich und das zweite Motiv nur in einem zweiten Betrachtungswinkelbereich, wobei die beiden Betrachtungswinkelbereiche unterschiedlich sind und sich nicht überlappen. Im ersten bzw. zweiten Betrachtungswinkelbereich kann das Flächenmuster um eine zweite Achse in einem Winkelbereich von mindestens 5° gekippt werden, ohne dass die erste bzw. zweite Ansicht verschwindet oder sich wesentlich verändert, weil die Mikrospiegel viele unterschiedliche Orientierungen oder eine gekrümmte Oberfläche haben.

## Beschreibung

Die Erfindung betrifft ein Sicherheitselement für Sicherheitspapiere, Wertdokumente oder dergleichen, das einem Betrachter ein Wechselbild mit mindestens zwei verschiedenen Ansichten darbietet, wobei die erste Ansicht ein erstes Motiv und die zweite Ansicht ein zweites Motiv zeigt, die im gleichen oder zumindest überlappenden Flächenbereichen erscheinen.

Aus dem Stand der Technik ist eine Vielzahl von Sicherheitselementen bekannt, die einem Betrachten beim Kippen einen Bildwechsel zwischen zwei oder mehr unterschiedlichen Motiven zeigen. Bekannt sind insbesondere Kippbilder, die auf Basis von Mikrolinsenarrays funktionieren, sowie Kippbilder, die durch Beugungsgitter (oft als "Hologramm" bezeichnet) oder Mikrospiegel realisiert werden.

Für ein möglichst effizientes Sicherheitselement, das auch bei schwierigen Lichtverhältnissen noch eine eindeutige, schnelle und möglichst einfache Prüfung ermöglicht, sind folgende Eigenschaften wichtig:
1) hohe Helligkeit und hoher Kontrast der Darstellung,
2) schneller Bildwechsel und klare Trennung der zwei oder mehr Bilder beim Kippen um die zur Prüfung vorgesehene Achse,
3) eine möglichst geringe Empfindlichkeit gegenüber Verkippung um andere Achsen, damit ein Betrachter die Bilder nicht erst durch Ausprobieren verschiedener Kippstellung bezüglich anderer Kippachsen "suchen" muss.

Mit Blick auf die Eigenschaft aus Punkt 1 sind insbesondere mikrospiegelbasierte Sicherheitselemente zu bevorzugen, die mit stark gerichteter Reflexion gegenüber linsen- oder hologrammbasierten Sicherheitselementen mehr Helligkeit und einen besseren Kontrast liefern können.

Ein vergleichsweise einfaches mikrospiegelbasiertes Kippbild ist aus EP 0868313 A1 bekannt. Dabei haben die zu einer Darstellung gehörenden Mikrospiegel jeweils fixe Orientierungen und die Hintergrundbereich sind beispielsweise flach (ohne Reliefstruktur) oder mit Beugungs- oder Mattstrukturen belegt. Die fixe beziehungsweise überall gleiche Orientierung der Mikrospiegle einer Darstellung sorgt für eine sehr hohe Helligkeit, die insbesondere bei gerichteter Beleuchtung aber nur in einem kleinen Kippwinkelbereich beobachtet werden kann. Weiterhin erscheinen Hintergrundbereiche ohne Reliefstrukturen oder mit Mattstrukturen belegt auch oft hell, so dass der Kontrast zwischen Kippbild-Darstellungen und dem Hintergrund nicht optimal ist. Zusätzlich kann ein Aufleuchten des Hintergrunds (beispielsweise bei flachem Hintergrund helles Aufleuchten im Spiegelreflex, oder bei Beugungsstrukturen ein Aufleuchten in Regenbogenfarben über einen größeren Winkelbereich) insbesondere zwischen dem Aufleuchten zweier Kippansichten stören.

Einen größeren Betrachtungswinkelbereich und weniger störenden Hintergrund kann man mit Kippeffekten erreichen, die gewölbt erscheinende Darstellungen zeigen, wie sie aus DE 10 2012 020 257 A1 bekannt sind. Solche Darstellungen erscheinen jedoch insgesamt nicht so hell, zeigen beim Kippen kein abruptes Erscheinen beziehungsweise Verschwinden, und haben oft auch nur wenig Kontrast zum Hintergrund.

Die Aufgabe der Erfindung besteht daher insbesondere darin, ein Sicherheitselement bereitzustellen, dass insbesondere die oben genannten Eigenschaften der Punkte 1 bis 3 besser und gleichzeitig erfüllt als die aus dem Stand der Technik bekannten Lösungen.

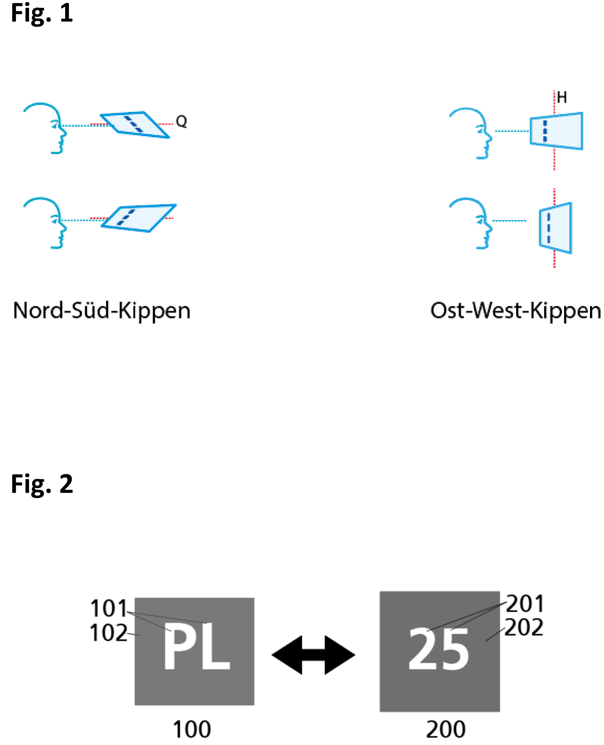

Zur Veranschaulichung der unterschiedlichen Kippachsen soll hier und im Folgenden zwischen Nord-Süd-Kippen und Ost-West-Kippen unterschieden werden, siehe Fig. 1. Unter Nord-Süd-Kippen (linke Abbildung) wird dabei verstanden, dass ein Betrachter eine Kippung um die Querachse Q durchführt, während Ost-West-Kippen (rechte Abbildung) eine Kippung um die Hochachse H meint, wie in Fig. 1 skizziert. Es ist jeweils vorgesehen, dass ein Betrachter den Bildwechsel beim Nord-Süd-Kippen betrachtet, wobei das Kippbild bei einer Verkippung in Ost-West in einem ausreichend großen Betrachtungswinkelbereich im Wesentlichen erhalten beziehungsweise unverändert bleibt. Letzteres dient dazu, dass man die Darstellungen auch bei stark gerichteter Beleuchtung gut sehen kann, ohne in Ost-West-Richtung einen engen vorgesehenen Winkelbereich genau treffen zu müssen.

Natürlich kann der Erfindungsgegenstand grundsätzlich auch für andere Kippachsen ausgelegt sein, also beispielsweise für einen Kipp beim Ost-West-Kippen mit großem Betrachtungswinkelbereich in Nord-Süd, oder für einen Kipp um eine andere Achse (beispielsweise Nordwest/Südost oder andere Achsen).

Die Aufgabe der Erfindung wird durch ein Sicherheitselement mit den Merkmalen des Anspruchs 1 gelöst. Hierbei bietet das Sicherheitselement in Form eines optisch variablen Flächenmusters einem Betrachter ein Kippbild mit mindestens zwei verschiedenen Ansichten dar, wobei die beiden Ansichten jeweils einen hellen Vordergrund und einen dunklen Hintergrund zeigen. Die Vordergrundbereiche werden dabei mit reflektierenden Mikrostrukturen erzeugt, insbesondere mit Mikrospiegelanordnungen. Die Mikrospiegel sind dabei so orientiert, dass die zur gleichen Ansicht gehörenden Mikrospiegel Licht jeweils in einen Raumwinkelbereich reflektieren, der bezüglich einer ersten Kippachse (in den Ausführungsbeispielen Nord-Süd-Kippen) unterschiedlich ist. Dabei sind die Kippwinkelbereiche nicht überlappend, bevorzugt voneinander beabstandet und/oder decken jeweils nur einen relativ kleinen Kippwinkelbereich ab, in dem die entsprechende Darstellung sehr hell aufleuchtet. Bezüglich einer zweiten Kipprichtung (in den Ausführungsbeispielen Ost-West-Kippen) soll erfindungsgemäß aber zumindest ein so großer Winkelbereich abgedeckt werden, dass ein Betrachter um diese Achse relativ weit kippen kann, ohne dass sich die Ansicht ändert oder sogar verschwindet. So soll sich bei stark gerichtet einfallendem Licht die Ansicht in einem Kippwinkelbereich von mindestens 5°, bevorzugt mindestens 10° und besonders bevorzugt mindestens 20° nicht ändern oder nicht verschwinden. Die Aufweitung des Kippwinkelbereichs in dieser Richtung kann bei Verwendung von Mikrospiegeln mit im Wesentlichen ebener Oberfläche durch zufällige Variation der entsprechenden Spiegelorientierungskomponente erfolgen oder alternativ durch Verwendung von zumindest in diese Richtung gekrümmten Spiegeln, die das reflektierte Licht in dieser Richtung entsprechend auffächern.

Ein erfindungsgemäßes Sicherheitselement ist passiv in dem Sinne, dass es nicht selbst leuchtet beziehungsweise Licht erzeugt, sondern nur einfallendes Umgebungslicht in bereichsweise unterschiedliche Richtungen reflektiert. Insofern wäre es in einer völlig dunklen Umgebung vollständig dunkel. Die Begriffe "hell" und "dunkel" sind hier daher so zu verstehen, dass in einer typischen Betrachtungssituation (beispielsweise in einem Raum mit Deckenbeleuchtung oder mit durch ein Fenster einfallendem Licht) die Mikrostrukturen in "hellen" Bereichen viel Licht aus der Umgebung in Richtung der Augen eines Betrachters reflektieren, während aus "dunklen" Bereichen weniger Umgebungslicht in die Augen des Betrachters reflektiert wird. "Hell" und "dunkel" sind dabei insbesondere in Relation zu einander gemeint. Wie hell oder dunkel das Sicherheitselement tatsächlich ist, hängt von den Umgebungslichtverhältnissen ab. Auch der vom Erfindungsgegenstand ermöglichte Kontrast, d.h. die Unterschiede zwischen "hell" und "dunkel", ist - wie bei anderen reflektierenden Sicherheitselementen im Stand der Technik auch - von den Umgebungslichtverhältnissen abhängig. So ist der Kontrast zwischen "hellen" und "dunklen" Bereichen üblicherweise bei stark gerichteter Beleuchtung höher als in diffusem Licht. In diesem Sinne ist auch der Begriff "aufleuchten" mit Bezug auf den Erfindungsgegenstand so zu verstehen, dass gegenüber Sicherheitselementen des Standes der Technik besonders viel einfallendes Licht zum Betrachter reflektiert.

Die hellen Bereiche der ersten und zweiten Ansicht sollen überlappen, damit ein Kippbild mit Bildwechsel am gleichen Ort realisiert werden kann. Dazu können die Mikrospiegel der beiden Ansichten innerhalb einer Prägeeben in einander verschachtelt vorliegen oder alternativ in übereinander angeordneten Ebenen bereitgestellt werden. Ein besonders vorteilhafter Aufbau mit zwei Prägeebenen ist insbesondere aus DE 10 2020 000 732 A1 bekannt. In speziellen Ausführungen kann dabei auch vorgesehen sein, dass die zu unterschiedlichen Ansichten gehörenden Mikrospiegel das einfallende Licht in unterschiedlichen Farben reflektieren, wodurch die beiden Ansichten die verschiedenen Motive in unterschiedlichen Farben darbieten, was den Kippeffekt weiter verstärkt. Solche Farbwechsel können durch Aufbauten mit zwei Prägeebenen realisiert werden, wie sie beispielsweise aus DE 10 2020 000 732 A1 bekannt sind oder dadurch, dass die Farbe des an den Mikrospiegeln reflektierte Licht mittels den Spiegeln überlagerten Nanostrukturen (insbesondere regelmäßige oder unregelmäßige Subwellenstrukturen mit Strukturabständen beziehungsweise Perioden von beispielsweise 50 nm bis 600 nm, bevorzugt 200 nm bis 400 nm) verändert wird. Die Nanostrukturen können dabei beispielsweise in Kombination mit einer einfachen Metallisierung (beispielsweise Aluminium-Beschichtung) insbesondere durch plasmonische Effekte Farben erzeugen oder in Kombination mit einer Interferenzbeschichtung (sogenannte "Colourshift"-Beschichtung mit Reflektor/Dielektrikum/Absorber, beispielsweise Aufbau mit Al/SiO₂/Cr) die Farbe der Interferenzbeschichtung verändern.

Die dunkel beziehungsweise nicht hell erscheinenden Hintergründe der ersten beziehungsweise zweiten Ansicht werden mit Reliefstrukturen belegt, die unter vielen und bevorzugt allen Kipprichtungen, vorteilhaft insbesondere im gesamten Betrachtungswinkelbereich zwischen und innerhalb der Winkelbereiche der ersten und zweiten Darstellung, dunkel erscheinen. Hierfür können vorteilhaft verwendet werden:
▪ Mikrospiegel, die bezüglich der ersten und/ oder zweiten Kipprichtung eine größere Neigung aufweisen, als die Mikrospiegel der hellen Vordergründe, so dass sie einfallendes Licht stärker oder zumindest in deutlich andere Richtungen ablenken als die Spiegel, die die hellen Vordergründe bereitstellen,
▪ lichtschluckende Strukturen, insbesondere auch mit Abmessungen im Subwellenlängenbereich (kleiner als die Wellenlänge des sichtbaren Lichtes), beispielsweise als "Mottenaugenstrukturen" oder "diffractive black" bezeichnete Subwellenlängenstrukturen, bevorzugt metallisiert und aus periodischen Gittern oder aperiodischen Anordnungen bestehend, insbesondere mit einem hohen Aspektverhältnis, d.h. einem hohen Verhältnis von Strukturhöhe zu Tiefe, oder
▪ andere lichtschluckende Strukturen mit Abmessungen oberhalb des "Subwellenlängenbereichs", insbesondere mit etwa 0,5 µm bis bevorzugt maximal 20 µm Strukturgröße, beispielsweise lichtschluckende "Mikrokavitäten".

Durch diese Kombination wird sichergestellt, dass der Kippeffekt gegenüber ungewollten Verkippungen bezüglich der Ost-West-Achse (allgemeiner: zweiten Kippachse) immer einen kontrastreichen Kippeffekt beim Nord-Süd-Kippen (allgemeiner: erste Kippachse) zeigt. Die bevorzugten Ausführungen des Hintergrunds stellen zudem sicher, dass beim Kippen von der ersten zur zweiten Kippansicht keine störenden Effekte wie ein plötzlich hell aufleuchtender Hintergrund auftreten.

Gemäß einer weiteren vorteilhaften Ausgestaltung des Sicherheitselements ist vorgesehen, dass die zu den hellen Bereichen des ersten beziehungsweise zweiten Motivs gehörenden strahlenoptisch wirkenden Reliefstrukturen in einander verschachtelt vorliegen und die Verschachtelung bevorzugt auf so kleiner Längenskale ausgeführt ist, dass sie ohne Hilfsmittel mit dem menschlichen Auge nicht auflösbar ist, insbesondere die Verschachtelung über Aufteilung in Pixel oder Streifen realisiert ist, deren Abmessungen kleiner als 100 µm und vorteilhaft kleiner als 50 µm sind.

Gemäß einer weiteren vorteilhaften Ausgestaltung des Sicherheitselements ist vorgesehen, dass die zu den hellen Bereichen des ersten beziehungsweise zweiten Motivs gehörenden strahlenoptisch wirkenden Reliefstrukturen Mikrospiegel mit im Wesentlichen gerader Oberfläche sind, wobei jeder einzelne Mikrospiegel bei gerichteter Beleuchtung einfallendes Licht im Wesentlichen nur in eine Richtung reflektiert, und der Erhalt der Sichtbarkeit des ersten beziehungsweise zweiten Motivs im vorgesehenen Betrachtungswinkelbereich bezüglich der ersten Kippachse beim Kippen um 5°, bevorzugt um 10° oder besonders bevorzugt um 20° um die zweite Achse dadurch realisiert ist, dass die einzelnen Mikrospiegel viele unterschiedliche Orientierungen aufweisen, die sich insbesondere in der zur zweiten Kippachse gehörenden Komponente unterscheiden, so dass das an der Gesamtheit der Mikrospiegel reflektierte Licht in einen entsprechend größeren Winkelbereich aufgefächert ist.

Gemäß einer weiteren vorteilhaften Ausgestaltung des Sicherheitselements ist vorgesehen, dass die zur zweiten Kippachse gehörende Komponente der Mikrospiegelorientierungen zufällig oder pseudozufällig aus einem vorgegebenen Bereich gewählt ist.

Gemäß einer weiteren vorteilhaften Ausgestaltung des Sicherheitselements ist vorgesehen, dass die zu den hellen Bereichen des ersten beziehungsweise zweiten Motivs gehörenden strahlenoptisch wirkenden Reliefstrukturen Mikrospiegel mit gekrümmter Oberfläche sind, die bei gerichteter Beleuchtung einfallendes Licht so auffächern, dass mit Bezug auf die zweite Kippachse ein Winkelbereich von mindestens 5°, bevorzugt mindestens 10° und besonders bevorzugt mindestens 20° abgedeckt wird.

Gemäß einer weiteren vorteilhaften Ausgestaltung des Sicherheitselements ist vorgesehen, dass in den dunklen Hintergrundbereichen lichtschluckende Mikro- oder Nanostrukturen, insbesondere periodische oder aperiodische Mottenaugenstrukturen vorgesehen sind.

Gemäß einer weiteren vorteilhaften Ausgestaltung des Sicherheitselements ist vorgesehen, dass in den dunklen Hintergrundbereichen reflektierende Mikrospiegel mit gekrümmter oder gerader Oberfläche vorgesehen sind, die eine mindestens 10%, bevorzugt mindestens 50% höhere Steigung aufweisen als die zu den Vordergrundbereichen gehörenden Mikrospiegel.

Gemäß einer weiteren vorteilhaften Ausgestaltung des Sicherheitselements ist vorgesehen, dass entweder die Vordergrundbereiche der beiden Motive oder die Vorder- und Hintergrundbereich mindestens eines Motivs einen unterschiedlichen Farbton aufweisen. Bevorzugt sind hierbei die unterschiedlichen Farbtöne durch den strahlenoptisch wirkenden Reliefstrukturen überlagerte Nanostrukturen erzeugt.

Gemäß einer weiteren vorteilhaften Ausgestaltung des Sicherheitselements ist vorgesehen, dass die Mikrospiegel mit einer farbkippenden Beschichtung versehen sind.

Gemäß einer weiteren vorteilhaften Ausgestaltung des Sicherheitselements ist vorgesehen, dass die zum Vordergrund des ersten beziehungsweise zweiten Motivs gehörenden strahlenoptisch reflektierenden Reliefstrukturen in zwei unterschiedlichen und voneinander beabstandeten Prägeebenen vorliegen, wobei das von den Reliefstrukturen in der ersten beziehungsweise zweiten Prägeebene reflektierte Licht bevorzugt unterschiedliche Farbtöne aufweist.

Gemäß einer weiteren vorteilhaften Ausgestaltung des Sicherheitselements ist vorgesehen, dass der Flächenbereich der ersten und zweiten Ansicht mit einem gewölbt erscheinenden Rahmen umgeben ist und der Wölbeffekt des Rahmens durch reflektierende, im Wesentlich strahlenoptisch wirkende Reliefstrukturen realisiert ist, die das Reflexionsverhalten einer gewölbten metallischen Oberfläche imitieren. Bevorzugt liegen hierbei im Rahmen zwei ineinander verschachtelte Wölbeffekte vor, die beim Kippen um die erste Achse in unterschiedlichen Kippwinkelbereichen sichtbar sind und den gleichen oder unterschiedlich gewölbt erscheinende Rahmen zeigen, wobei der Kippwinkelbereich des ersten Wölbeffekts den ersten Kippwinkelbereich umfasst, in dem das erste Motiv sichtbar ist, und der Kippwinkelbereich des zweiten Wölbeffekts den zweiten Kippwinkelbereich des zweiten Motivs umfasst, so dass ein Betrachter das erste beziehungsweise zweite Motiv jeweils mit einem im gleichen Betrachtungswinkelbereich sichtbaren beziehungsweise aufleuchtenden gewölbt erscheinenden Rahmen sieht.

Wertdokumente, für die ein erfindungsgemäßes Sicherheitselement verwendet werden kann, sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, sowie Karten, wie beispielsweise Kredit- oder Debitkarten, deren Kartenkörper mindestens eine Lage eines Sicherheitspapiers aufweist, und auch Produktsicherungselemente, wie Etiketten, Siegel, Verpackungen, Faltschachteln, Beipackzettel und dergleichen. Die vereinfachte Benennung Wertdokument schließt alle oben genannten Materialien, Dokumente und Produktsicherungsmittel ein.

Es versteht sich, dass die vorstehend genannten und die nachfolgend noch zu erläuternden Merkmale nicht nur in den angegebenen Kombinationen, sondern auch in anderen Kombinationen einsetzbar sind, ohne den Rahmen der vorliegenden Erfindung zu verlassen, soweit dies von dem Schutzumfang der Ansprüche erfasst ist.

Anhand der nachfolgenden Ausführungsbeispiele und der ergänzenden Figuren werden die Vorteile der Erfindung erläutert. Die Ausführungsbeispiele stellen bevorzugte Ausführungsformen dar, auf die jedoch die Erfindung in keinerlei Weise beschränkt sein soll. Des Weiteren sind die Darstellungen in den Figuren des besseren Verständnisses wegen stark schematisiert und spiegeln nicht die realen Gegebenheiten wider. Insbesondere entsprechen die in den Figuren gezeigten Proportionen nicht den in der Realität vorliegenden Verhältnissen und dienen ausschließlich zur Verbesserung der Anschaulichkeit. Des Weiteren sind die in den folgenden Ausführungsbeispielen beschriebenen Ausführungsformen der besseren Verständlichkeit wegen auf die wesentlichen Kerninformationen reduziert. Bei der praktischen Umsetzung können wesentlich komplexere Muster oder Bilder zur Anwendung kommen.

Im Einzelnen zeigen schematisch:
- Fig. 1: zur Veranschaulichung die beiden verschiedenen Kipprichtungen,
- Fig. 2: in Draufsicht ein erfindungsgemäßes Sicherheitselement bei Betrachtung aus einem ersten Kippwinkelbereich (100) und bei Betrachtung aus einem zweiten Kippwinkelbereich (200) bezüglich einer ersten Kippachse,
- Fig. 3: in Draufsicht ein erfindungsgemäßes Sicherheitselement, bei dem der Kippeffekt aus Fig. 2 mit einem anderen Kippeffekt, insbesondere mit einem Wölb-Kipp-Effekt kombiniert ist,
- Fig. 4: in Draufsicht ein erfindungsgemäßes Sicherheitselement, bei dem der Kippeffekt mehrfarbig ausgeführt ist.

Fig. 2 zeigt ein erfindungsgemäßes Sicherheitselement bei Betrachtung aus einem ersten Kippwinkelbereich (100) und bei Betrachtung aus einem zweiten Kippwinkelbereich (200) bezüglich einer ersten Kippachse. Der Bildwechsel zwischen 100 und 200 könnte beispielsweise beim Nord-Süd-Kippen um einen Winkel von beispielsweise 20° erfolgen:
Typische Abmessungen solcher Darstellungen liegen bei den heutigen Sicherheitselementen (Sicherheitsfaden, Sicherheitsstreifen, Patch) bei wenigen oder einigen Millimetern. Ein Betrachter sieht hier im ersten Kippwinkelbereich die Buchstaben "PL" und in der zweiten Kippstellung die Zahl "25" hell aufleuchten. Die Darstellungen bestehen jeweils aus einem hellen Vordergrund (101, 201) und einem dunklen Hintergrund (102, 202).

Ein mögliche Realisierung der hellen Bereiche besteht in der Verwendung von Mikrospiegeln. Diese können Abmessungen von beispielsweise 3 µm bis 100 µm, bevorzugt 5 µm bis etwa 20 µm haben. Für einen Kippeffekt um die Nord-Süd-Achse können die Spiegel des Vordergrunds 101 beispielsweise nach "Norden" (d.h. nach oben) und die Spiegel des Vordergrunds 201 nach "Süden" geneigt sein, so dass je nach Kippstellung nur eine Sorte der Spiegel hell aufleuchtet und die anderen Spiegel entsprechend dunkel sind und sich vom dunklen Hintergrund kaum oder gar nicht erkennbar abheben. Die Neigung in Nord-Süd-Richtung kann für alle Mikrospiegel des Vordergrunds 101 beziehungsweise alle Mikrospiegel des Vordergrunds 201 jeweils genau gleich sein oder innerhalb eines vorgegebenen Bereichs variieren. Beispielsweise können alle Spiegel der Darstellung 101 um 10° nach Norden und alle Spiegel zu 201 um 10° nach Süden geneigt sein. Damit wäre beim Nord-Süd-Kippen ein sehr helles aber auch sehr kurzes (nur in einem engen Kippwinkelbereich) sichtbares Aufleuchten realisiert. In anderen Ausführungen können die Werte auch um einen jeweiligen Mittelwert variieren, also beispielsweise aus einem Bereich von 5° bis 15° beziehungsweise -15° bis -5° gewählt sein. Generell kann der Fachmann durch Wahl der mittleren Orientierung einstellen, wie weit man Kippen muss, um den Bildwechsel zu beobachten, und die Größe des jeweiligen Bereichs hat dann einen Einfluss auf die Helligkeit und "Anzeigedauer" der Darstellung beim Kippen. Für eine möglichst klare Trennung (im Gegensatz zu einem langsamen "Überblenden") der Ansichten 100 und 200 sollten die Winkelbereiche der Nord-Süd-Komponenten der Spiegel der Vordergründe 101 und 201 möglichst nicht überlappen, bevorzugt sind sie sogar zumindest einige Grad (mindestens 3°, besonders bevorzugt mindestens 5°) voneinander getrennt.

Damit die Ansichten auch bei kleinen oder vorteilhaft auch größeren Verkippungen in Ost-West-Richtung erhalten bleiben, können die Spiegel beispielswiese auch eine Neigungskomponente in Ost-West-Richtung aufweisen. Diese kann insbesondere zufällig oder pseudozufällig gewählt sein, so dass innerhalb eines bestimmten Kippbereichs bezüglich dieser Achse immer ein Teil der Spiegel hell aufleuchtet. Je kleiner die Mikrospiegel sind, desto besser lässt sich hier eine über viele Winkel eine weitgehend homogene Helligkeit erreichen. Je größer die Spiegel werden, desto eher werden die unterschiedlich aufleuchtenden Spiegel auch mit dem bloßen Auge sichtbar, was jedoch nicht negativ sein muss und beispielsweise auch als "Glitzereffekte" empfunden werden kann.

Da die Vordergrundmotive 101 und 201 überlappen, sind die zugehörigen Mikrospiegel in einander verschachtelt angeordnet. Diese Verschachtelung ist bevorzugt auf einer Längenskala unterhalb des Auflösungsvermögens des menschlichen Auges ausgeführt, beispielsweise können die Bereiche der Mikrospiegel zu 101 beziehungsweise 201 auf einer Schachbrett- oder Streifenaufteilung vorliegen, bei denen die Felder oder Streifen Abmessungen zwischen 10 µm und etwa 100 µm haben können.

In den Hintergrundbereichen 202, 102 können ebenfalls Mikrospiegel vorliegen. Diese können in Nord-Süd- und/oder Ost-West-Richtung bevorzugt eine wesentlich größere Neigung aufweisen als die Mikrospiegel der Vordergrundbereiche 101, 201. Im oben genannte Beispiel mit Nord-Süd-Steigungskomponenten von +/-10° könnten die Hintergrundspiegel beispielsweise die doppelte Steigungskomponenten (also +/- 20°) aufweisen. Analog könnten in Ost-West-Richtung für die Spiegel 101, 201 ein Variationsbereich von -10° bis +10° vorgesehen sein, während die entsprechenden Neigungskomponenten in den Bereichen 202, 102 beispielsweise +20° und/oder -20° betragen kann. Die Spiegel in den Hintergrundbereichen können alle dieselbe oder unterschiedliche Orientierungen haben. In der Praxis vorteilhaft sind beispielsweise Anordnungen mit vier unterschiedlichen Orientierungen, bei denen die Spiegel sehr stark (so weit wie durch technische Limitierungen möglich) in Nordost-, Nordwest-, Südost- und Südwest-Richtung ausgerichtet sind. Damit würde der Hintergrund erst hell aufleuchten, wenn der Betrachter ein Sicherheitselement um beide Kipprichtungen maximal weit aus der Mittelposition verkippt, und auch dann würde nur ein Teil der Spiegel (hier: ein Viertel) aufleuchten.

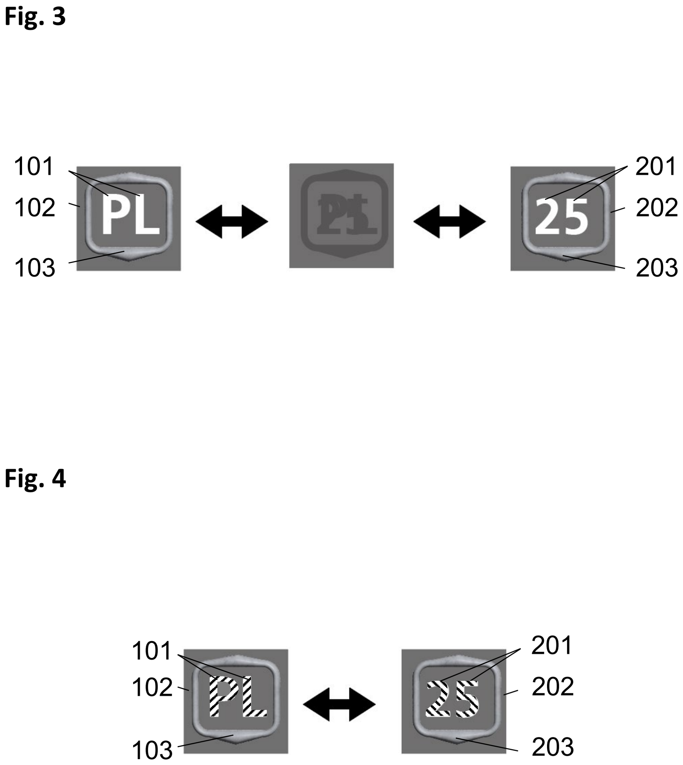

Fig. 3 zeigt ein erfindungsgemäßes Sicherheitselement, bei dem der Kippeffekt aus Fig. 2 mit einem anderen Kippeffekt, insbesondere mit einem Wölb-Kipp-Effekt kombiniert ist, wie es aus DE 10 2012 020 257 A1 bekannt ist. Es hat sich dabei gezeigt, dass solch ein Wölb-Kipp-Effekt sehr gut auch einen gewölbt erscheinenden Rahmen um den erfindungsgemäßen Kippeffekt bereitstellen kann. Beim Kippen kann unter den entsprechenden Kippwinkeln bezüglich der ersten Kippachse ein gewölbt erscheinender Rahmen sichtbar werden. Dieser Rahmen kann für die erste und zweite Ansicht eine unterschiedliche aber insbesondere auch die gleiche Form haben. Letzteres ist praktisch ein Wölb-Kipp-Effekt "in sich selbst" und hat gegenüber einem normalen Wölbeffekt den Vorteil, dass der Rahmen jeweils nur dann hell sichtbar sein kann, wenn auch der zugehörige erfindungsgemäße Kipp sichtbar ist. Ein Betrachter sieht beim Kippen um die erste Achse dann folgende Bildfolge, wobei 103 und 203 die jeweils sichtbaren Wölbrahmen bezeichnen, die hier jeweils ein gleiches Aussehen zeigen ("Wölb-Kipp in sich selbst"), während in einer Zwischenstellung der Kipp in der Mitte wie auch der Rahmen dunkel ist. Neben dem Rahmen können auch andere oder zusätzliche Wölb-Kipp-Elemente vorgesehen sein.

Fig. 4 zeigt ein erfindungsgemäßes Sicherheitselement, bei dem der Kippeffekt mehrfarbig ausgeführt ist. Die Mehrfarbigkeit kann insbesondere wie oben beschrieben mittels Nanostrukturen auf den Mikrospiegeln realisiert werden. Alternativ kann er auch mit zwei Prägeebenen realisiert sein, wie er insbesondere aus der DE 10 2020 000 732 A1 bekannt ist. Hierbei liegen die Spiegel zu 101 und 201 in unterschiedlichen Prägeebene und müssen nicht innerhalb einer Ebene verschachtelt werden. In einer Ausführung mit Nanostrukturen kann beispielsweise vorgesehen sein, dass die Mikrospiegel zu 101 mit blau erscheinenden Nanostrukturen versehen werden und die Mikrospiegel zu 201 mit gelb erscheinenden Nanostrukturen. Zusätzlich oder alternativ können auch die Rahmenbereiche 103, 203 mit unterschiedlich oder gleichfarbigen Nanostrukturen (hier: beide jeweils rot) überlagert werden.

In anderen Ausführungen können auch die Vordergrundbereiche 101, 201 die gleiche Farbe aufweisen, aber zumindest einer der Hintergrundbereiche 102, 202 oder Rahmen 103, 203 eine von der Farbe der Bereiche 101,102 abweichende Farbe aufweisen.

## Patentansprüche

1. Sicherheitselement für Sicherheitspapiere, Wertdokumente oder dergleichen, das einem Betrachter ein Wechselbild mit mindestens zwei verschiedenen Ansichten darbietet, wobei die erste Ansicht ein erstes Motiv und die zweite Ansicht ein zweites Motiv zeigt, die im gleichen oder zumindest überlappenden Flächenbereichen erscheinen, **dadurch gekennzeichnet, dass**
• das erste und zweite Motiv jeweils aus einem hell erscheinenden Vordergrundbereich und einem diesen Vordergrundbereich umgebenden dunkel erscheinenden Hintergrundbereich bestehen,
• unter gerichteter Beleuchtung beim Kippen des Sicherheitselements um eine erste Achse das erste Motiv nur in einem ersten Betrachtungswinkelbereich und das zweite Motiv nur in einem zweiten Betrachtungswinkelbereich erscheint, wobei die beiden Betrachtungswinkelbereiche unterschiedlich sind und sich nicht überlappen,
• im ersten bzw. zweiten Betrachtungswinkelbereich das Flächenmuster um eine zweite Achse in einem Winkelbereich von mindestens 5°, bevorzugt mindestens 10° und besonders bevorzugt mindestens 20° gekippt werden kann, ohne dass die erste bzw. zweite Ansicht verschwindet oder sich wesentlich verändert,
• die hellen Vordergrundbereiche der beiden Motive strahlenoptisch wirkende Reliefstrukturen, insbesondere Mikrospiegelstrukturen, sind,
• die dunklen Hintergrundbereiche Reliefstrukturen sind, die das einfallende Licht absorbieren und/oder in Richtungen außerhalb der für die beiden Ansichten vorgesehenen Betrachtungswinkelbereiche reflektieren.

2. Sicherheitselement nach Anspruch 1, **dadurch gekennzeichnet, dass** die zu den hellen Bereichen des ersten bzw. zweiten Motivs gehörenden strahlenoptisch wirkenden Reliefstrukturen in einander verschachtelt vorliegen und die Verschachtelung bevorzugt auf so kleiner Längenskale ausgeführt ist, dass sie ohne Hilfsmittel mit dem menschlichen Auge nicht auflösbar ist, insbesondere die Verschachtelung über Aufteilung in Pixel oder Streifen realisiert ist, deren Abmessungen kleiner als 100 µm und vorteilhaft kleiner als 50 µm sind.

3. Sicherheitselement nach Anspruch 1 oder 2, **dadurch gekennzeichnet, dass** die zu den hellen Bereichen des ersten bzw. zweiten Motivs gehörenden strahlenoptisch wirkenden Reliefstrukturen Mikrospiegel mit im Wesentlichen gerader Oberfläche sind, wobei jeder einzelne Mikrospiegel bei gerichteter Beleuchtung einfallendes Licht im Wesentlichen nur in eine Richtung reflektiert, und der Erhalt der Sichtbarkeit des ersten bzw. zweiten Motivs im vorgesehenen Betrachtungswinkelbereich bzgl. der ersten Kippachse beim Kippen um 5°, bevorzugt um 10° oder besonders bevorzugt um 20° um die zweite Achse dadurch realisiert ist, dass die einzelnen Mikrospiegel viele unterschiedliche Orientierungen aufweisen, die sich insbesondere in der zur zweiten Kippachse gehörenden Komponente unterscheiden, so dass das an der Gesamtheit der Mikrospiegel reflektierte Licht in einen entsprechend größeren Winkelbereich aufgefächert ist.

4. Sicherheitselement nach mindestens einem der vorigen Ansprüche, **dadurch gekennzeichnet, dass** die zur zweiten Kippachse gehörende Komponente der Mikrospiegelorientierungen zufällig oder pseudozufällig aus einem vorgegebenen Bereich gewählt ist.

5. Sicherheitselement nach mindestens einem der vorigen Ansprüche, **dadurch gekennzeichnet, dass** die zu den hellen Bereichen des ersten bzw. zweiten Motivs gehörenden strahlenoptisch wirkenden Reliefstrukturen Mikrospiegel mit gekrümmter Oberfläche sind, die bei gerichteter Beleuchtung einfallendes Licht so auffächern, dass mit Bezug auf die zweite Kippachse ein Winkelbereich von mindestens 5°, bevorzugt mindestens 10° und besonders bevorzugt mindestens 20° abgedeckt wird.

6. Sicherheitselement nach mindestens einem der vorigen Ansprüche, **dadurch gekennzeichnet, dass** in den dunklen Hintergrundbereichen lichtschluckende Mikro- oder Nanostrukturen, insbesondere periodische oder aperiodische Mottenaugenstrukturen vorgesehen sind.

7. Sicherheitselement nach mindestens einem der vorigen Ansprüche, **dadurch gekennzeichnet, dass** in den dunklen Hintergrundbereichen reflektierende Mikrospiegel mit gekrümmter oder gerader Oberfläche vorgesehen sind, die eine mindestens 10%, bevorzugt mindestens 50% höhere Steigung aufweisen als die zu den Vordergrundbereichen gehörenden Mikrospiegel.

8. Sicherheitselement nach mindestens einem der vorigen Ansprüche, **dadurch gekennzeichnet, dass** entweder die Vordergrundbereiche der beiden Motive oder die Vorder- und Hintergrundbereich mindestens eines Motivs einen unterschiedlichen Farbton aufweisen.

9. Sicherheitselement nach Anspruch 8, **dadurch gekennzeichnet, dass** die unterschiedlichen Farbtöne durch den strahlenoptisch wirkenden Reliefstrukturen überlagerte Nanostrukturen erzeugt sind.

10. Sicherheitselement nach mindestens einem der vorigen Ansprüche, **dadurch gekennzeichnet, dass** die Mikrospiegel mit einer farbkippenden Beschichtung versehen sind.

11. Sicherheitselement nach mindestens einem der vorigen Ansprüche, **dadurch gekennzeichnet, dass** die zum Vordergrund des ersten bzw. zweiten Motivs gehörenden strahlenoptisch reflektierenden Reliefstrukturen in zwei unterschiedlichen und voneinander beabstandeten Prägeebenen vorliegen, wobei das von den Reliefstrukturen in der ersten bzw. zweiten Prägeebene reflektierte Licht bevorzugt unterschiedliche Farbtöne aufweist.

12. Sicherheitselement nach mindestens einem der vorigen Ansprüche, **dadurch gekennzeichnet, dass** der Flächenbereich der ersten und zweiten Ansicht mit einem gewölbt erscheinenden Rahmen umgeben ist und der Wölbeffekt des Rahmens durch reflektierende, im Wesentlich strahlenoptisch wirkende Reliefstrukturen realisiert ist, die das Reflexionsverhalten einer gewölbten metallischen Oberfläche imitieren.

13. Sicherheitselement nach Anspruch 12, **dadurch gekennzeichnet, dass** im Rahmen zwei ineinander verschachtelte Wölbeffekte vorliegen, die beim Kippen um die erste Achse in unterschiedlichen Kippwinkelbereichen sichtbar sind und den gleichen oder unterschiedlich gewölbt erscheinende Rahmen zeigen, wobei der Kippwinkelbereich des ersten Wölbeffekts den ersten Kippwinkelbereich umfasst, in dem das erste Motiv sichtbar ist, und der Kippwinkelbereich des zweiten Wölbeffekts den zweiten Kippwinkelbereich des zweiten Motivs umfasst, so dass ein Betrachter das erste bzw. zweite Motiv jeweils mit einem im gleichen Betrachtungswinkelbereich sichtbaren bzw. aufleuchtenden gewölbt erscheinenden Rahmen sieht.
